**Europäisches Patentamt**

**European Patent Office**

**Office européen des brevets**

(11) Veröffentlichungsnummer : **0 042 638**
**B1**

# (12) EUROPÄISCHE PATENTSCHRIFT

(45) Veröffentlichungstag der Patentschrift :
13.03.85

(51) Int. Cl.⁴ : **C 10 K   1/30**, B 01 D 53/12

(21) Anmeldenummer : 81200610.4

(22) Anmeldetag : 04.06.81

(54) **Verfahren zur Heissentschwefelung von Brenn- oder Reduktionsgasen.**

(30) Priorität : 24.06.80 DE 3023480

(43) Veröffentlichungstag der Anmeldung :
30.12.81 Patentblatt 81/52

(45) Bekanntmachung des Hinweises auf die Patenterteilung : 13.03.85 Patentblatt 85/11

(84) Benannte Vertragsstaaten :
**AT DE FR GB IT SE**

(56) Entgegenhaltungen :
DE-A- 1 494 791
DE-B- 1 202 432
FR-A- 2 189 101
FR-A- 2 250 721
US-A- 3 784 676
US-A- 4 065 271

(73) Patentinhaber : **METALLGESELLSCHAFT AG**
**Reuterweg 14 Postfach 3724**
**D-6000 Frankfurt/M.1 (DE)**

(72) Erfinder : **Reh, Lothar, Dr.-Ing.**
**Stettiner Strasse 3**
**D-6000 Frankfurt 60 (DE)**
Erfinder : **Hirsch, Martin, Dipl.-Ing.**
**Römerstrasse 7**
**D-6382 Friedrichsdorf 4 (DE)**
Erfinder : **Serbent, Harry, Dr.-Ing.**
**Gustav-Hoch-Strasse 5 D**
**D-6450 Hanau am Main (DE)**

(74) Vertreter : **Fischer, Ernst, Dr.**
**Reuterweg 14**
**D-6000 Frankfurt am Main 1 (DE)**

**Beschreibung**

Die Erfindung betrifft ein Verfahren zur Heißentschwefelung von reduzierend wirkenden Brenn- oder Reduktionsgasen unter Entfernung von im wesentlichen H$_2$S mit Kalk und/oder Dolomit bzw. den entsprechenden gebrannten Produkten (Entschwefelungsmitteln) in der Wirbelschicht.

Die Technik ist in steigendem Maße vor die Aufgabe gestellt, aus den Primär-Energieträgern Erdgas, Erdöl und Kohle Gase herzustellen, die für die verschiedensten Zwecke, wie die Energieerzeugung (Schwachgase) und die Direktreduktion von Eisenerzen (Reduktionsgase) bestimmt sind. Diese Gase, die als brennbare bzw. reduzierende Bestandteile in erster Linie Kohlenmonoxid und Wasserstoff enthalten, weisen stets von den betreffenden Primär-Energieträgern stammende Schwefelgehalte auf, die aus Gründen des Umweltschutzes bei der Energieerzeugung oder aus Gründen der Prozeßführung, z. B. bei der Direktreduktion, abzutrennen sind.

Neben älteren Verfahren, die nur in bestimmten niedrigen Temperaturbereichen arbeiten, z. B. Naßwäsche, und mithin eine Abkühlung der zunächst heiß zur Verfügung stehenden Gase voraussetzen, sind in jüngerer Zeit Verfahren entwickelt worden, die eine Entfernung der Schwefelverbindungen, vornehmlich des Schwefelwasserstoffs und des Kohlenoxisulfids, in « einer Hitze », d. h. bei der Temperatur, mit der die Brenn- oder Reduktionsgase anfallen, gestatten. So ist es beispielsweise bekannt, bei der Schnellentgasung und/oder Schnellteilvergasung von Kohlenstaub anfallende Gase weitgehend zu entschwefeln, indem nach Abtrennung von Koks der Teil des Gases ohne vorherige Abkühlung in mit Dolomit oder Kalk gefüllte, periodisch durchströmte Reaktionsräume behandelt wird, der als Heiz- oder Trägergas im Reaktionsraum zur Schnellent- und/oder Teilvergasung und/oder zur weitgehenden Entschwefelung des Koksstaubes durch Nachbehandlung benötigt wird (DE-AS 26 59 753). Dabei kann die Entschwefelung in ruhender oder bewegter Schüttung, in einer Wirbelschicht oder während der pneumatischen Förderung erfolgen.

Ein anderes Heißentschwefelungsverfahren sieht vor, zur Entschwefelung reduziertes Eisenerz im Gegenstrom oder Fließbett bei Temperaturen von 700 °C bis 1 200 °C zu verwenden und dabei gleichzeitig Anteile von unreagiertem Kohlenstoff zu entfernen (DE-OS 27 27 107).

Nachteilig bei den bekannten Verfahren ist, daß die Entschwefelung nur teilweise möglich ist, was insbesondere dadurch problematisch ist, als in Zukunft in erhöhtem Maße Kohle als Primär-Energieträger verwendet werden wird und darüber hinaus Kohlen mit steigenden Schwefelgehalten eingesetzt werden müssen, bzw. daß bei der Entschwefelung mit reduziertem Eisenerz ein schwefelhaltiges Produkt anfällt, das einer Röstbehandlung bedarf. Hierzu sind eine Röst- und Schwefelsäureanlage erforderlich, die in üblichen Vergasungs- und Reduktionsanlagen nicht zur Verfügung stehen und deshalb gesondert bereitgestellt werden müssen.

Auch ist es bekannt, gasförmige Austrittsprodukte aus bekannten Ölvergasern unmittelbar im Anschluß an ihren Austritt durch in körniger Form vorliegendes CaO, das saure Oxide, wie Al$_2$O$_3$ und SiO$_2$ enthält, bei 800 bis 1 200 °C zu leiten und dabei zweckmäßigerweise die gasförmigen Austrittsprodukte mit dem CaO im Wirbelschichtverfahren in Berührung zu bringen (DE-AS 12 02 432).

Die US-PS 3 784 676 beschreibt ein mehrstufiges Verfahren zur Erzeugung eines schwefelfreien Abgases mit zwischenzeitlicher Bindung der Schwefelverbindungen an im fluidisierten Zustand befindliche schwefelbindende Substanzen bei Temperaturen von etwa 800 bis 1 100 °C. Nach Regenerierung des beladenen Entschwefelungsmittels erfolgt der erneute Einsatz zur Bindung von Schwefel.

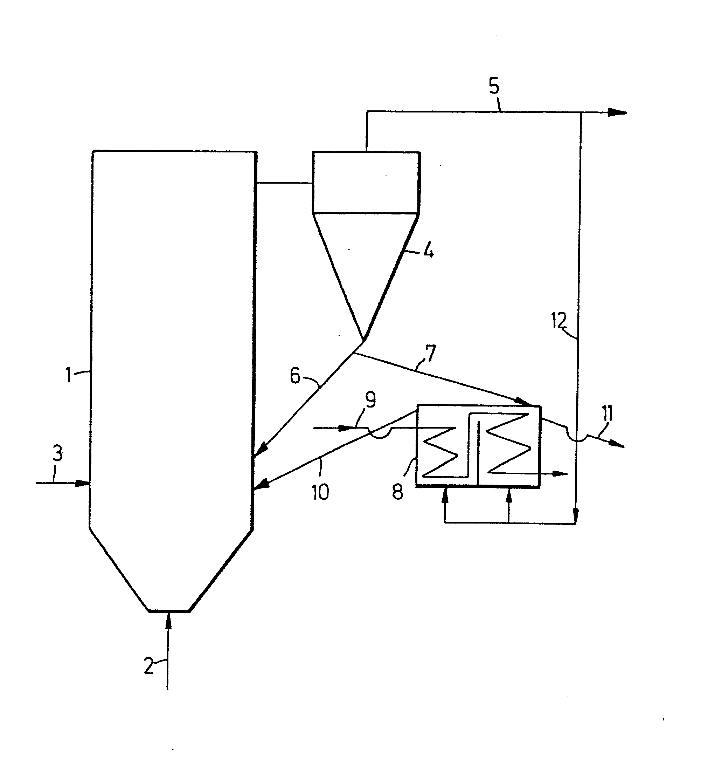

Soweit in den vorgenannten Verfahren das Wirbelschichtverfahren überhaupt erläutert ist, kommen sogenannte « klassische » Wirbelschichtverfahren, d. h. Verfahren mit definierter Bettoberfläche, bei der also die dichte Phase des Wirbelbettes durch einen deutlichen Dichtesprung von dem darüber befindlichen Gasraum getrennt ist, zum Einsatz (vgl. z. B. in der US-PS 3 784 676 die Fig. 4 und 5 und Spalte 7, Zeilen 7 bis 9 mit einer für klassische Wirbelschichten typischen Wirbelgasgeschwindigkeit von 0,24 bis 0,75 m/sec).

Nachteilig bei den nach dem Prinzip der « klassischen » Wirbelschichtverfahren arbeitenden Verfahren ist insbesondere die vergleichsweise geringe, auf die Flächeneinheit des Wirbelschichtreaktors bezogene Gas-Durchsatzleistung sowie — bei gleicher Körnung — die bei den hohen Entschwefelungstemperaturen bestehende Neigung des Entschwefelungsmittels zur Klumpenbildung, die die zur weitgehenden Schwefelentfernung erforderliche einwandfreie Verfahrensführung erschwert oder ausschließt.

Aufgabe der Erfindung ist es, ein Verfahren zur Heißentschwefelung von reduzierend wirkenden Brenn- oder Reduktionsgasen unter Entfernung von im wesentlichen H$_2$S bereitzustellen, das die Nachteile der bekannten, insbesondere vorgenannten Verfahren vermeidet und — verglichen mit herkömmlichen Verfahren — ohne zusätzlichen Aufwand eine praktisch vollständige Entschwefelung gewährleistet.

Die Aufgabe wird gelöst, indem das Verfahren der eingangs genannten Art entsprechend der Erfindung derart ausgestaltet wird, daß man die Brenn- oder Reduktionsgase als Fluidisierungsgas 2 mit einer Geschwindigkeit von 1 bis 10 m/sec in einen Wirbelschichtreaktor 1, der die Entschwefelungsmittel mit einer Teilchengröße dp$_{50}$ von 30 bis 200 μm enthält, einleitet, im Wirbelschichtreaktor 1 eine mittlere Suspensionsdichte von 0,1 bis 10 kg/m$^3$, eine Temperatur von 700 bis 1 100 °C und ein stöchiometrisches Verhältnis von Entschwefelungsmittel zu im Gas enthaltenen Schwefelverbindungen von 1,2 bis 2,0 (berechnet als Ca : S) einstellt und die mit den Gasen aus dem Wirbelschichtreaktor 1 ausgetragenen Feststoffe derart zur Ausbildung einer zirkulierenden Wirbelschicht in den Wirbelschichtreaktor 1 zurückleitet, daß der stündliche Feststoffumlauf mindestens das Fünffache des im Reaktorschacht befindlichen Feststoffgewichtes ausmacht.

Die vorstehend genannte Fluidisierungsgasgeschwindigkeit ist als sogenannte Leerrohrgeschwindigkeit definiert, d. h. sie bezieht sich auf einen von Entschwefelungsmitteln freien Wirbelschichtreaktor.

Das bei der Erfindung angewendete Wirbelschichtprinzip zeichnet sich dadurch aus, daß — im Unterschied zur « klassichen » Wirbelschicht, bei der eine dichte Phase durch einen deutlichen Dichtesprung von dem darüber befindlichen Gasraum getrennt ist — Verteilungszustände ohne definierte Grenzschicht vorliegen. Ein Dichtesprung zwischen dichter Phase und darüber befindlichem Staubraum ist nicht existent ; jedoch nimmt innerhalb des Reaktors die Feststoffkonzentration von unten nach oben ständig ab.

Bei der Definition der Betriebsbedingungen über die Kennzahlen von Froude und Archimedes ergeben sich die Bereiche :

$$0,1 \leqslant 3/4 \cdot F_r^2 \cdot [\rho g/(\rho k - \rho g)] \leqslant 10,$$

bzw.

$$0,01 \leqslant Ar \leqslant 100,$$

wobei

$$Ar = [d_k^3 \cdot g \ (\rho k - \rho g)]/(\rho g \cdot \nu^2)$$

und

$$F_r^2 = u^2/(g \cdot d_K)$$

sind.

Es bedeuten :

u die relative Gasgeschwindigkeit in m/sec

Ar die Archimedeszahl

$F_r$ Froude-Zahl

$\rho g$ die Dichte des Gases in kg/m$^3$

$\rho k$ die Dichte des Feststoffteilchens in kg/m$^3$

$d_k$ den Durchmesser des kugelförmigen Teilchens in m

$\nu$ die kinematische Zähigkeit in m$^2$/sec

g die Gravitationskonstante in m/sec$^2$

Das erfindungsgemäße Verfahren zeichnet sich dadurch aus, daß die Entschwefelung bei hohen Gasdurchsätzen und bei sehr konstanter Temperatur durchgeführt werden kann. Die hohe Temperaturkonstanz wirkt sich für die Entschwefelung insofern positiv aus, als das Entschwefelungsmittel seine Aktivität und damit sein Aufnahmevermögen gegenüber Schwefel behält. Die hohe Feinkörnigkeit des Entschwefelungsmittels ergänzt diesen Vorteil, da das Verhältnis von Oberfläche zu Volumen für die im wesentlichen durch die Diffusionsgeschwindigkeit bestimmte Bindungsgeschwindigkeit des Schwefels besonders günstig ist.

Bei der Dosierung des Entschwefelungsmittels entsprechend der vorgenannten Menge ist zu berücksichtigen, daß bei Verwendung von Dolomit oder gebranntem Dolomit praktisch nur die Kalziumkarbonat-Komponente mit den Schwefelverbindungen reagiert und das einzusetzende stöchiometrische Verhältnis von Entschwefelungsmittel zu Brenn- oder Reduktionsgas von 1,2 bis 2,0 nur auf den Kalziumanteil zu berechnen ist.

Der der Entschwefelung dienende Wirbelschichtreaktor kann von rechteckigem, quadratischem oder kreisförmigem Querschnitt sein. Der untere Bereich des Wirbelschichtreaktors kann auch konisch ausgebildet sein, was insbesondere bei großen Reaktorquerschnitten und damit hohen Gasdurchsätzen vorteilhaft ist.

Der Eintrag von Entschwefelungsmittel in den Wirbelschichtreaktor erfolgt auf übliche Weise, am zweckmäßigsten über eine oder mehrere Lanzen, z. B. durch pneumatisches Einblasen. Infolge der bei zirkulierenden Wirbelschichten gegebenen guten Quervermischung reicht eine vergleichsweise geringe Zahl an Eintragslanzen.

Besonders günstige Betriebsbedingungen werden erzielt, wenn die zu entschwefelnden Brenn- oder Reduktionsgase mit einer Geschwindigkeit von 4 bis 8 m/sec in den Wirbelschichtreaktor eingetragen werden und in diesem eine mittlere Suspensionsdichte von 1 bis 5 kg/m$^3$ eingestellt wird.

Die hinsichtlich Entschwefelung optimalen Bedingungen werden erhalten, wenn in weiterer vorteilhafter Ausgestaltung der Erfindung im Wirbelschichtreaktor eine Temperatur von 800 bis 1 050 °C eingestellt wird und wenn das stöchiometrische Verhältnis von Entschwefelungsmittel zu im Gas enthaltenen Verbindungen 1,3 bis 1,5 beträgt (berechnet als Ca : S).

Sofern die zu entschwefelnden Brenn- oder Reduktionsgase mit einer Temperatur zur Verfügung gestellt werden, die oberhalb der zur Durchführung der Erfindung gegebenen Grenze liegt, sieht eine weitere vorteilhafte Ausgestaltung der Erfindung vor, die Temperatur im Wirbelschichtreaktor durch Eintrag von in einem Wirbelschichtkühler gekühltem Entschwefelungsmittel einzustellen. Hierzu wird dem aus Wirbelschichtreaktor, Rückführzyklon und Rückführleitung gebildeten Kreislauf Entschwefelungsmittel entnommen, in einem Wirbelschichtkühler, vorzugsweise einem solchen mit mehreren nacheinander durchflossenen Kühlkammern, in die miteinander verbundene Kühlregister eintauchen und in denen das Kühlmittel im Gegenstrom zum Entschwefelungsmittel fließt, gekühlt und danach in den vorgenannten Kreislauf zurückgeführt.

Obgleich der Fall einer erforderlichen Aufheizung der Brenn- oder Reduktionsgase seltener ist, kann in analoger Weise vorgegangen werden, indem anstelle des Wirbelschichtkühlers ein Wirbelschichtaufheizer eingesetzt wird.

Eine vorteilhafte Weiterbildung der Erfindung sieht vor, das beladene Entschwefelungsmittel oxidierend zu behandeln, wodurch insbesondere Kalziumsulfid in deponierbaren oder auf dem Bausektor einsetzbaren Gips überführt wird. Die Oxidation erfolgt zweckmäßigerweise ebenfalls in einer Wirbelschicht, vorzugsweise in einer zirkulierenden Wirbelschicht.

Die Erfindung wird anhand der Figur beispielsweise und näher erläutert. Die Figur veranschaulicht schematisch die Verfahrensführung in der Ausgestaltung mit Kühlung des Entschwefelungsmittels und Rückführung in den Wirbelschichtreaktor.

Der Wirbelschichtreaktor 1 wird über Leitung 2 mit den Brenn- oder Reduktionsgasen und über Lanze 3 mit dem Entschwefelungsmittel beaufschlagt. Innerhalb des Wirbelschichtreaktors 1 bildet sich eine den genannten Reaktor ausfüllende Gas/Feststoff-Suspension aus, die am Reaktorkopf ausgetragen und in einem Rückführzyklon 4 zur Trennung von Gas und Entschwefelungsmittel geleitet wird. Das entschwefelte Brenn- oder Reduktionsgas verläßt den Rückführzyklon 4 über Leitung 5. Ein Teil des Entschwefelungsmittels wird über Rückführleitung 6 in den Wirbelschichtreaktor 1 zurückgeführt. Ein weiterer Teilstrom über Leitung 7 gelangt in den Wirbelschichtkühler 8, wird dort gegen durch Kühlregister 9 geführtes Wasser gekühlt und gelangt dann über Leitung 10 in den Wirbelschichtreaktor 1. Ein dem Eintrag von frischem Entschwefelungsmittel entsprechender Teil beladenes Entschwefelungsmittel wird über Leitung 11 abgeführt. Der Wirbelschichtkühler wird mit über Leitung 12 zugeführtem Gas fluidisiert, das nach Durchgang gemeinsam mit dem gekühlten Entschwefelungsmittel in den Wirbelschichtreaktor 1 zurückgeführt wird.

## Beispiel 1

Zu entschwefeln war ein Gas der Zusammensetzung:

64,9 Vol.-% CO
4,3 Vol.-% $CO_2$
25,1 Vol.-% $H_2$
4,3 Vol.-% $H_2O$
1,0 Vol.-% $N_2$
0,4 Vol.-% $H_2S$,

das in einer Menge von 30 $Nm^3/h$ und mit einer Temperatur von 1 400 °C anfiel.

Dem Wirbelschichtreaktor 1 wurde dieses Gas über Leitung 2 sowie 0,81 kg/h Kalkstein ($CaCO_3$, 1,5-fache des stöchiometrischen Bedarfs) über Leitung 3 aufgegeben. Der Kalkstein hatte eine mittlere Teilchengröße von $dp_{50} = 200$ μm. Von dem in Rückführzyklon 4 vom Gas abgetrennten Entschwefelungsmittel wurden 60 kg/h dem Wirbelschichtkühler 8 über Leitung 7 aufgegeben, der Rest über Rückführleitung 6 in den Wirbelschichtreaktor 1 zurückgeführt.

Der Wirbelschichtkühler 8 wurde mit entschwefeltem Gas aus Leitung 5, das über Leitung 12 in einer Menge von 1 $m^3/h$ zugeführt wurde, fluidisiert. Zur Kühlung dienten 12 kg/h Wasser von 105 °C, das unter einem Druck von 5 bar zugeführt und beim Durchgang durch das Kühlregister 9 in Sattdampf gleichen Drucks überführt wurde. Das Entschwefelungsmittel kühlte sich dabei auf 300 °C ab. Es wurde bis auf einen Teil von 0,53 kg/h, der über Leitung 11 ausgeschleust wurde, in den Wirbelschichtreaktor 1 über Leitung 10 zurückgeführt.

Aufgrund der gewählten Betriebsbedingungen stellte sich im Wirbelschichtreaktor 1 eine Temperatur von 800 °C ein, mit der auch das entschwefelte Brenn- oder Reduktionsgas über Leitung 5 abgeführt wurde. Das Gas enthielt noch 0,04 Vol.-% $H_2S$, was einer Entschwefelung von 90 % entspricht. Die mittlere Suspensionsdichte im Wirbelschichtreaktor betrug 4 $kg/m^3$. Die stündliche Umlaufrate des Entschwefelungsmittels war das 30-fache des im Wirbelschichtreaktor 1 befindlichen Entschwefelungsmittels.

Das in einer Menge von 0,53 kg/h und mit einer Temperatur von 300 °C aus dem Wirbelschichtkühler 8 ausgeschleuste Entschwefelungsmittel wurde in einer zirkulierenden Wirbelschicht (nicht dargestellt) mit 1,26 $m^3/h$ Luft von 20 °C fluidisiert und dabei im wesentlichen zu Gips oxidiert. Die Temperatur in der zirkulierenden Wirbelschicht betrug 850 °C. Das Abgas, das in einer Menge von 1,13 $m^3/h$ anfiel, war frei von Schwefelverbindungen und bestand im wesentlichen aus

88,5 Vol.-% $N_2$
11,5 Vol.-% $O_2$.

**0 042 638**

Der aus der zirkulierenden Wirbelschicht ausgetragene Feststoff (0,84 kg/h) enthielt

79 Gew.-% Gips
21 Gew.-% Kalziumoxid.

Beispiel 2

Es war ein Brenn- bzw. Reduktionsgas der in Beispiel 1 beschriebenen Zusammensetzung und Menge zu entschwefeln, das jedoch eine Temperatur von 860 °C aufwies. Die Kühlung eines Teilstromes von Entschwefelungsmittel in einem gesonderten Wirbelschichtkühler war entbehrlich, da eine Temperatur des entschwefelten Gases von 800 °C erwünscht war.

Das genannte Gas wurde über Leitung 2, Dolomit in einer Menge von 1,2 kg/h über Leitung 3 in den Wirbelschichtreaktor 1 eingeleitet. Der Dolomit hatte eine mittlere Teilchengröße von $dp_{50} = 200$ μm. Bezogen auf den Kalziumanteil war die stöchiometrische Menge das 1,2-fache des theoretischen Bedarfs.

Das mit den Gasen aus dem Wirbelschichtreaktor 1 ausgetragene Entschwefelungsmittel wurde im Rückführzyklon 4 vom Gas getrennt und bis auf 0,7 kg/h, die dem frisch aufgegebenen Entschwefelungsmittel entsprachen, in den Wirbelschichtreaktor 1 zurückgeführt.

Im Wirbelschichtreaktor 1 stellte sich infolge der beschriebenen Wirbelbedingungen eine mittlere Suspensionsdichte von 3 kg/m³ und eine Temperatur von 800 °C ein. Die stündliche Umlaufrate für das Entschwefelungsmittel betrug das 20-fache der im Wirbelschichtreaktor 1 befindlichen Menge an Entschwefelungsmittel.

**Ansprüche**

1. Verfahren zur Heißentschwefelung von reduzierend wirkenden Brenn- oder Reduktionsgasen unter Entfernung von im wesentlichen $H_2S$ mit Kalk und/oder Dolomit bzw. den entsprechenden gebrannten Produkten (Entschwefelungsmitteln) in der Wirbelschicht, dadurch gekennzeichnet, daß man die Brenn- oder Reduktionsgase als Fluidisierungsgas (2) mit einer Geschwindigkeit von 1 bis 10 m/sec in einen Wirbelschichtreaktor (1), der die Entschwefelungsmittel mit einer Teilchengröße $dp_{50}$ von 30 bis 200 μm enthält, einleitet, im Wirbelschichtreaktor (1) einer mittlere Suspensionsdichte von 0,1 bis 10 kg/m³, eine Temperatur von 700 bis 1 100 °C und ein stöchiometrisches Verhältnis von Entschwefelungsmittel zu im Brenn- oder Reduktionsgas enthaltenen Schwefelverbindungen von 1,2 bis 2,0 (berechnet als Ca : S) einstellt, und die mit den Gasen aus dem Wirbelschichtreaktor ausgetragenen Entschwefelungsmittel derart zur Ausbildung einer zirkulierenden Wirbelschicht in den Wirbelschichtreaktor (1) zurückleitet, daß der stündliche Feststoffumlauf mindestens das 5-fache des im Reaktorschacht befindlichen Feststoffgewichtes ausmacht.

2. Verfahren nach Anspruch 1, dadurch gekennzeichnet, daß man die Brenn- oder Reduktionsgase mit einer Geschwindigkeit von 4 bis 8 m/sec in den Wirbelschichtreaktor (1) einträgt.

3. Verfahren nach Anspruch 1 oder 2, dadurch gekennzeichnet, daß man im Wirbelschichtreaktor (1) die mittlere Suspensionsdichte auf 1 bis 5 kg/m³ einstellt.

4. Verfahren nach Anspruch 1, 2 oder 3, dadurch gekennzeichnet, daß man im Wirbelschichtreaktor (1) eine Temperatur von 800 bis 1 050 °C einstellt.

5. Verfahren nach einem oder mehreren der Ansprüche 1 bis 4, dadurch gekennzeichnet, daß man das stöchiometrische Verhältnis von Entschwefelungsmittel zu im Brenn- oder Reduktionsgas enthaltenen Schwefelverbindungen auf 1,3 bis 1,5 (berechnet als Ca : S) einstellt.

6. Verfahren nach einem oder mehreren der Ansprüche 1 bis 5, dadurch gekennzeichnet, daß man die Temperatur im Wirbelschichtreaktor durch Eintrag von in einem Wirbelschichtreaktor aufgeheizten oder gekühlten Entschwefelungsmittel einstellt.

7. Verfahren nach einem oder mehreren der Ansprüche 1 bis 6, dadurch gekennzeichnet, daß man in einer Folgebehandlung das primär gebildete Kalziumsulfid oxidativ in Gips überführt.

**Claims**

1. A hot desulfurizing process for treating fuel gases having a reducing effect or reducing gases with separation particularly of $H_2S$ in a fluidized bed with lime and/or dolomite or the corresponding calcined products (desulfurizing agents), characterized in that the fuel gas or reducing gas serving as a fluidizing gas (2) is introduced at a velocity of 1 to 10 m/sec into a fluidized bed reactor (1), which contains a desulfurizing agent having a particle size $dp_{50} = 30$ to 200 microns, a suspension having a mean solids density of 0.1 to 10 kg/m³, a temperature of 700 to 1,100 °C and a stoichiometric ratio of 1.2 to 2.0 (calculated as Ca : S) of desulfurizing agent to sulfur compounds contained in the gas are maintained in the fluidized bed reactor (1), and the solids entrained by the gases leaving the fluidized bed reactor (1) are recycled to the latter to form a circulating fluidized bed in such a manner that the weight of solids circulated per hour is at least five times the weight of solids contained in the reactor shaft.

5

2. A process according to claim 1, characterized in that the fuel gases or reducing gases are fed into the fluidized bed reactor (1) at a velocity of 4 to 8 m/sec.

3. A process according to claim 1 or 2, characterized in that a suspension having a mean density of 1 to 5 kg/m³ is maintained in the fluidized bed reactor (1).

4. A process according to claim 1, 2 or 3, characterized in that a temperature of 800 to 1,050 °C is maintained in the fluidized bed reactor (1).

5. A process according to any of claims 1 to 4, characterized in that the stoichiometric ratio of desulfurizing agent to sulfur compounds contained in the fuel gas or reducing gases amounts to 1.3 to 1.5 (calculated as Ca : S).

6. A process according to any of claims 1 to 5, characterized in that the temperature in the fluidized bed reactor (1) is controlled by a feeding of desulfurizing agent which has been heated or cooled in a fluidized bed reactor.

7. A process according to any of claims 1 to 6, characterized in that primarily formed calcium sulfide is converted to gypsum in a subsequent oxidizing treatment.

## Revendications

1. Procédé de désulfuration à chaud de gaz combustibles à action réductrice, ou de gaz réducteurs, avec élimination de H₂S, pour l'essentiel, par de la chaux et/ou de la dolomite ou des produits calcinés correspondants (agents de désulfuration) en lit fluidisé, caractérisé en ce qu'il consiste à envoyer les gaz de combustion ou de réduction, à titre de gaz de fluidisation (2), à une vitesse de 1 à 10 m/s, dans un réacteur à lit fluidisé (1) qui contient l'agent de désulfuration en une granulométrie $dp_{50}$ de 30 à 200 microns, à établir dans le réacteur à lit fluidisé (1) une masse volumique moyenne de suspension de 0,1 à 10 kg/m³, une température de 700 à 1 100 °C et un rapport stœchiométrique de l'agent de désulfuration, par rapport aux composés soufrés contenus dans le gaz de combustion ou de réduction, de 1,2 à 2,0 (exprimé en Ca : S) et à retourner l'agent de désulfuration, entraîné avec les gaz hors du réacteur à lit fluidisé, pour constituer un lit fluidisé circulant, dans le réacteur à lit fluidisé (1), de manière à ce que la recirculation horaire de matières solides représente au moins 5 fois le poids de matières solides se trouvant dans la cuve du réacteur.

2. Procédé suivant la revendication 1, caractérisé en ce qu'il consiste à charger les gaz combustibles ou réducteurs dans le réacteur à lit fluidisé (1) à une vitesse de 4 à 8 m/s.

3. Procédé suivant la revendication 1 ou 2, caractérisé en ce qu'il consiste à régler la masse volumique moyenne de la suspension dans le réacteur à lit fluidisé (1) entre 1 et 5 kg/m³.

4. Procédé suivant les revendications 1, 2 ou 3, caractérisé en ce qu'il consiste à régler la température dans le réacteur à lit fluidisé (1) entre 800 et 1 050 °C.

5. Procédé suivant l'une ou plusieurs des revendications 1 à 4, caractérisé en ce qu'il consiste à régler le rapport stœchiométrique de l'agent de désulfuration aux composés soufrés contenus dans le gaz de combustion ou de réduction, entre 1,3 et 1,5 (exprimé en Ca : S).

6. Procédé suivant l'une ou plusieurs des revendications 1 à 5, caractérisé en ce qu'il consiste à régler la température dans le réacteur à lit fluidisé, par introduction d'agents de désulfuration qui ont été chauffés ou refroidis dans un réacteur à lit fluidisé.

7. Procédé suivant l'une ou plusieurs des revendications 1 à 6, caractérisé en ce qu'il consiste à transformer, dans un traitement ultérieur, le sulfure de calcium primaire formé en plâtre par oxydation.